# EUROPEAN PATENT SPECIFICATION

(11) **EP 3 682 736 B1**
(45) Date of publication and mention of the grant of the patent: **24.01.2024**
(21) Application number: 18892937.6
(22) Date of filing: 21.11.2018
(51) Int. Cl.: A01K 23/00, A01K 1/015, A01K 5/02, A01K 15/02

(54) **DOG TOILET**
HUNDETOILETTE
TOILETTES POUR CHIEN

(30) Priority: 22.12.2017 JP 2017245892
(43) Date of publication of application: 22.07.2020
(73) Proprietor: Unicharm Corporation, Shikokuchuo-shi, Ehime 799-0111 (JP)
(72) Inventor: HIROSHIMA, Kenji, Kanonji-shi, Kagawa 769-1602 (JP); MATSUO, Takayuki, Kanonji-shi, Kagawa 769-1602 (JP)
(74) Representative: Staeger & Sperling Partnerschaftsgesellschaft mbB
(86) International application number: PCT/JP2018/043013
(87) International publication number: WO 2019/123959

(56) References cited:
- JP-A- 2004 507 257
- JP-A- 2006 238 780
- JP-A- 2008 193 958
- JP-U- 3 204 296
- US-A1- 2004 050 342
- US-B1- 9 737 045

## Description

### [Technical Field]

The present invention relates to a dog toilet.

### [Background Art]

Conventionally, animal toilets used by animals such as pets (for example, dogs) are known. As animal toilets, there are also known toilets that give a stimulus (such as food, sound, or smell) when animals excrete in the toilets to train (toilet-train) the animals to spontaneously excrete in the toilets. For example, a toilet described in Patent Literature 1 includes: a urination detection sensor provided in a bottom portion; and a feeder that operates on the basis of a detection result of the urination detection sensor. When an animal excretes in the toilet, the urination detection sensor detects urine, and food is supplied from the feeder.

### [Citation List]

### [Patent Literature]

[Patent Literature 1] Japanese Patent Application Publication No. 2009-45053. Further prior art in this technical field is disclosed in documents US 2004/050342 A1, US 9,737,045 B1 and JP 2006 238780 A.

### [Summary of Invention]

### [Technical Problem]

However, with the above-described animal toilet, it is difficult to toilet train dogs to always excrete in the toilet. For example, there is a risk that dogs discharge residual urine in an area outside the toilet while eating supplied food and soil the area outside the toilet.

The present invention was achieved in light of conventional problems such as that described above, and an aspect of the present invention is to provide a dog toilet capable of preventing an area outside a toilet from being soiled with urine.

### [Solution to Problem]

The present invention for achieving the above-described aspect is defined by the features of claim 1 and refers to a dog toilet having a front-rear direction, a left-right direction, and an up-down direction that are perpendicular to one another,
the dog toilet including:
a bottom portion;
a urination detection sensor capable of detecting whether there is urination by a dog;
a wall portion provided to surround the bottom portion;
an access opening provided in the wall portion on one side in the front-rear direction with respect to a front-rear-direction center position; and
a feeder configured to supply food from a feeding port based on a detection result of the urination detection sensor,
   the feeding port being provided on another side in the front-rear direction with respect to the frontrear-direction center position.

Features of the present invention other than the above will become clear by reading the description of the present specification with reference to the accompanying drawings.

### [Advantageous Effects of Invention]

According to the present invention, it is possible to prevent an area outside a toilet from being soiled with urine.

### [Brief Description of the Drawings]

[FIG. 1] FIG. 1 is a schematic perspective view of a dog toilet 10.
[FIG. 2] FIG. 2 is a plan view of the dog toilet 10 viewed from above.
[FIG. 3] FIG. 3 is a sectional view illustrating a configuration of a bottom portion 20.
[FIG. 4] FIG. 4A is a sectional view illustrating an arrangement of individual electrodes (a positive electrode 41 and a negative electrode 42) in the bottom portion 20. FIG. 4B is a plan view of a portion around a grate 24 viewed from above. FIG. 4C is a perspective view of FIG. 4B. FIG. 4D is a sectional view
[FIG. 5] FIG. 5 is a block diagram illustrating configurations of a urination detection sensor 40 and a feeder unit 50.
[FIG. 6] FIG. 6A is a schematic sectional view illustrating a configuration of a feeder 52. FIG. 6B is a top view of a scale 110 illustrated in FIG. 6A.
[FIG. 7] FIG. 7 is a diagram illustrating a modification of the dog toilet 10.
[FIG. 8] FIG. 8 is an explanatory diagram illustrating an example of a case where a feeding plate 51 is not used.
[FIG. 9] FIG. 9 is an explanatory diagram illustrating another example of a case where the feeding plate 51 is not used.

### [Description of Embodiments]

At least the following matters will become clear with the description of this specification and the attached drawings.

A dog toilet having a front-rear direction, a left-right direction, and an up-down direction that are perpendicular to one another, the dog toilet including:
a bottom portion;
a urination detection sensor capable of detecting whether there is urination by a dog;
a wall portion provided to surround the bottom portion;
an access opening provided in the wall portion on one side in the front-rear direction with respect to a frontrear-direction center position; and
a feeder configured to supply food from a feeding port based on a detection result of the urination detection sensor,
   the feeding port being provided on another side in the front-rear direction with respect to the front-rear-direction center position.

With such a dog toilet, a dog which is eating food can stay away from the access opening. This makes it possible to prevent an area outside the toilet from being soiled with urine due to the dog discharging residual urine in the area outside the toilet while eating the food.

In such a dog toilet, it is acceptable that
the wall portion is a continuous plate-shaped wall.

With such a dog toilet, it is possible to prevent food or urine from spilling to an area outside the toilet.

In such a dog toilet, it is acceptable that
the wall portion includes:
a first wall portion that is plate-shaped and is erected on the bottom portion, and
a second wall portion that is mesh-like and is provided above the first wall portion.

With such a dog toilet, it is possible to prevent food or urine from spilling to an area outside the toilet. In addition, a dog can have good visibility, making it more likely for the dog to excrete without any stress.

In such a dog toilet, it is acceptable that
in the bottom portion, a continuous convex member is arranged between an excretion area of the dog and a feeding area where the food is supplied.

With such a dog toilet, food supplied from the feeding port can be prevented from rolling out onto the excretion area or to an area outside the toilet.

In such a dog toilet, it is acceptable that
in the bottom portion, a continuous concave groove is formed between an excretion area of the dog and a feeding area where the food is supplied.

With such a dog toilet, food supplied from the feeding port can be prevented from rolling out onto the excretion area or to an area outside the toilet.

In such a dog toilet, it is according to the invention that
a liquid-absorbent absorbent member that absorbs urine is arranged in the bottom portion, and
an area of a portion of the absorbent member located on the other side in the front-rear direction
   is larger than
an area of a portion of the absorbent member located on the one side in the front-rear direction.

With such a dog toilet, since there is a high possibility of a dog approaching the feeding port, there is a high possibility that the location of urination is on a feeding-port side. This makes it possible for an absorbent member to be arranged efficiently.

In such a dog toilet, it is acceptable that
the bottom portion is provided with a protruding portion that surrounds the absorbent member.

With such a dog toilet, it is possible for the absorbent member to be secured against being moved even if a dog walks around in the toilet.

In such a dog toilet, it is acceptable that
the feeding port is arranged in a comer portion, and
the comer portion is constituted by a portion of the wall portion on the other side in the frontrear direction and a portion of the wall portion on either one of sides in the left-right direction.

With such a dog toilet, it is possible to ensure a wide excretion area in the toilet.

In such a dog toilet, it is acceptable that
the feeder is provided outside the wall portion.

With such a dog toilet, it is possible to ensure a wide excretion area in the toilet. It is also possible to prevent a dog from eating food stored in the feeder.

In such a dog toilet, it is acceptable that
the access opening is provided with a door, and
the door is an automatically opening and closing door that opens after a predetermined period passes since the urination detection sensor detects urination by the dog.

With such a dog toilet, it is possible to make a dog stay in the toilet for a certain period after urination. Consequently, it is possible to prevent an area outside the toilet from being soiled with residual urine.

In such a dog toilet, it is acceptable that
the feeding port is provided on one side in the left-right direction with respect to a left-right-direction center position, and
the access opening is provided on another side in the left-right direction with respect to the left-right-direction center position.

With such a dog toilet, it is possible to delay a dog having eaten food from exiting to the outside of the toilet.

In such a dog toilet, it is acceptable that
the feeding port and the access opening are provided on an identical side in the left-right direction with respect to a left-right-direction center position.

With such a dog toilet, a dog is more likely to enter the toilet.

### Embodiment

### Overall Configuration

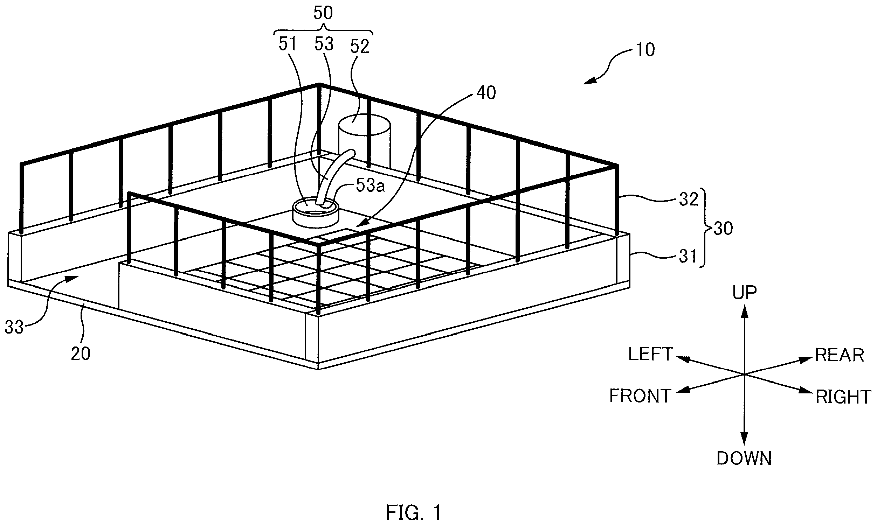

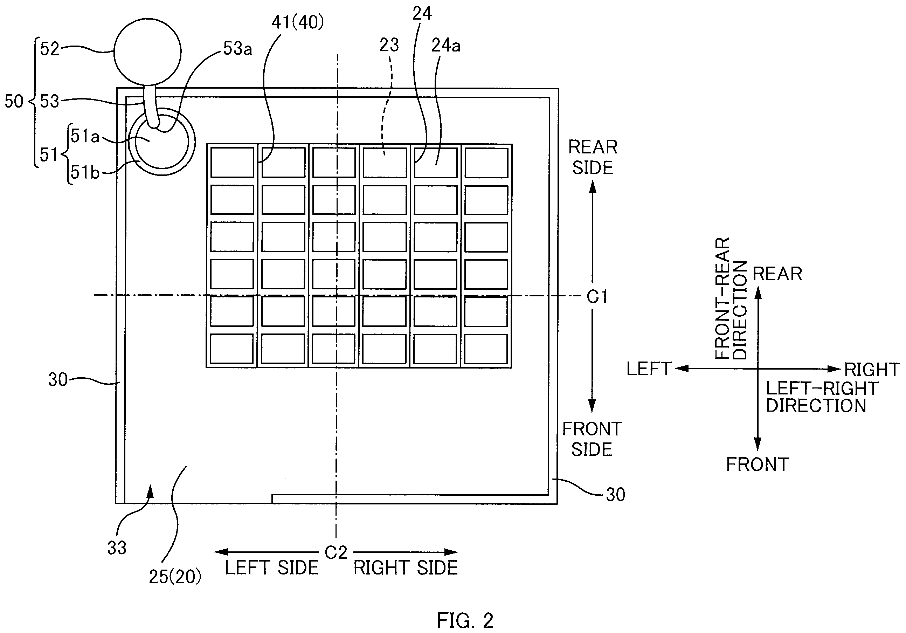

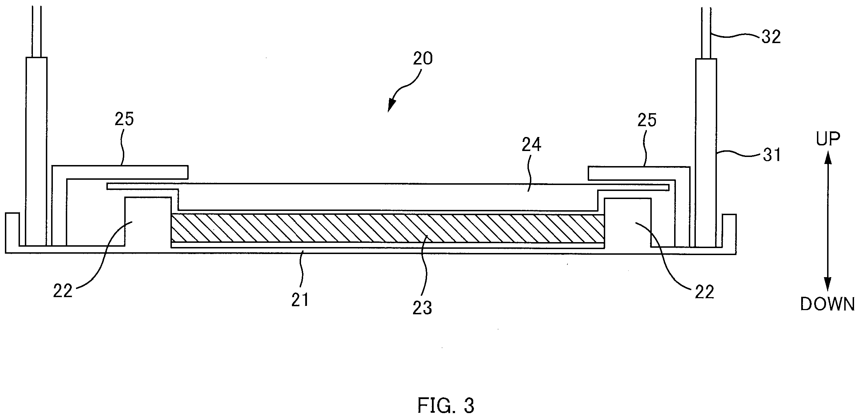

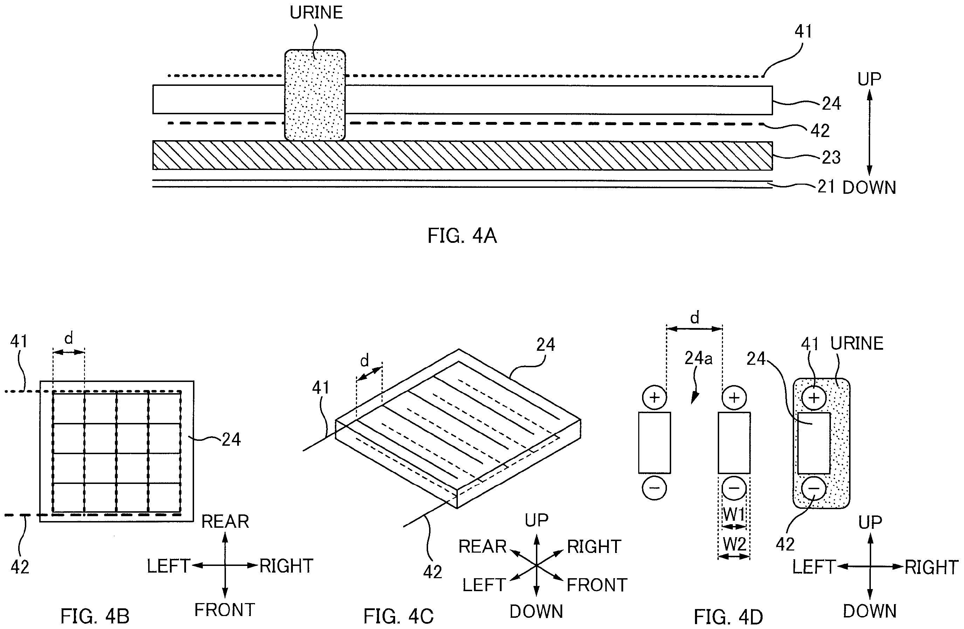

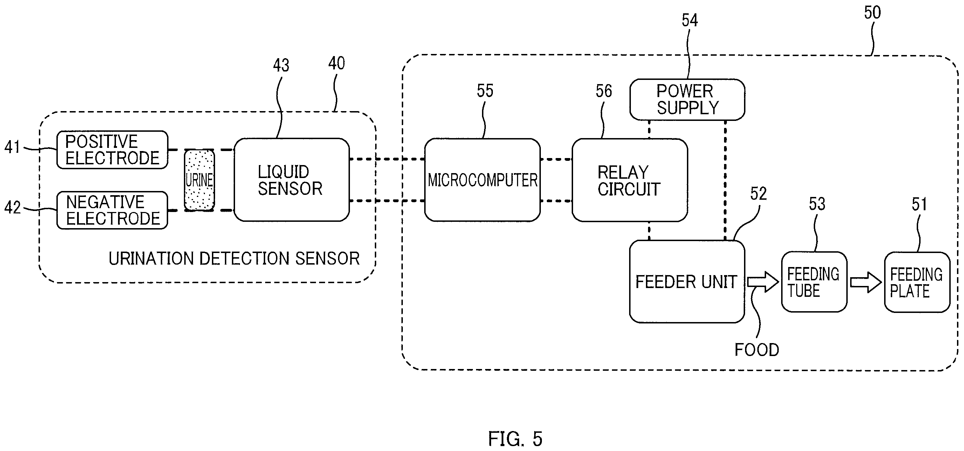

A dog toilet 10 will be described as an example of a dog toilet according to the present embodiment. FIG. 1 is a schematic perspective view of the dog toilet 10. FIG. 2 is a plan view of the dog toilet 10 viewed from above. In addition, FIG. 3 is a sectional view illustrating an example of a configuration of a bottom portion 20. Further, FIG. 4A is a sectional view illustrating an arrangement of individual electrodes (a positive electrode 41 and a negative electrode 42) in the bottom portion 20. In addition, FIG. 4B is a plan view of a portion around a grate 24 viewed from above, FIG. 4C is a perspective view of FIG. 4B, and FIG. 4D is a sectional view. Note that, in FIG. 4C, apertures 24a of the grate 24 are omitted to clarify the arrangement of the individual electrodes, and viewable portions of the electrodes are denoted by solid lines and hidden portions of the electrodes are denoted by broken lines. Further, FIG. 5 is a block diagram illustrating configurations of a urination detection sensor 40 and a feeder unit 50.

The dog toilet 10 is a toilet capable of being used for toilettraining a dog and is placed on the floor or the like for use. In the following description, "front-rear direction", "left-right direction", and "up-down direction", which denote three directions perpendicular to one another, are defined as illustrated in FIG. 1. The up-down direction is the vertical direction. A placement surface (a bottom surface of a bottom-portion main body 21) side is denoted as "lower side", and the opposite side is denoted as "upper side". In addition, the front-rear direction and the left-right direction denote directions of a horizontal plane (horizontal direction). As illustrated in FIG. 2, a central position in the front-rear direction is denoted as a center position C1. A side where an access opening 33 is provided relative to the center position C1 is denoted as "front side", and the opposite side is denoted as "rear side". In addition, a central position in the left-right direction is denoted as a center position C2. A side where the access opening 33 is provided relative to the center position C2 is denoted as "left side", and the opposite side is denoted as "right side".

The dog toilet 10 includes the bottom portion 20, a wall portion 30, the urination detection sensor 40, and the feeder unit 50.

As illustrated in FIG. 1 and FIG. 2, the bottom portion 20 has a rectangular shape in plan view, and respective sides of the bottom portion 20 extend in the front-rear direction and the left-right direction. In addition, as illustrated in FIG. 3, the bottom portion 20 includes the bottom-portion main body 21, a protruding portion 22, an absorption sheet 23 (corresponding to an absorbent member), the grate 24 (corresponding to an insulating member and a liquid-permeable layer), and a cover 25.

The bottom-portion main body 21 is the lowest portion (base) of the bottom portion 20 and is a portion that constitutes a toilet structure. An area surrounded by the protruding portion 22 in the bottom-portion main body 21 (in other words, an area where the absorption sheet 23 is arranged) is an area where a dog excretes. In the following description, this area is also referred to as an excretion area.

The protruding portion 22 is a portion that protrudes upward from the bottom-portion main body 21 and is provided so as to surround the absorption sheet 23. The bottom-portion main body 21 is provided with the protruding portion 22 in this manner, and the absorption sheet 23 is arranged inside the protruding portion 22. Consequently, the absorption sheet 23 is less likely to be displaced (the absorption sheet 23 is less likely to be moved) even if the dog walks around, for example.

The absorption sheet 23 is a liquid-absorbent sheet member that absorbs urine or the like excreted by an animal (herein, a dog), and the absorption sheet 23 includes a liquid absorbent material (corresponding to an absorbent body) such as pulp fiber or superabsorbent polymer. In addition, in the present embodiment, the absorption sheet 23 contains deodorant microcapsules and an antibacterial agent, masking the smell of absorbed urine and suppressing the propagation of bacteria from occurring. The absorption sheet 23 is arranged in the excretion area (the area surrounded by the protruding portion 22 in the bottom-portion main body 21). As a result of the absorption sheet 23 being arranged in the excretion area in this manner, urine is absorbed by the absorption sheet 23. This makes it possible to suppress erroneous operation of the urination detection sensor 40 and a feeder 52 due to dispersal of urine caused by vibration that occurs when the dog moves around wildly, for example.

Note that, in the present embodiment, the absorption sheet 23 (as well as the grate 24) is arranged to be lopsided with respect to the center position C1 in the front-rear direction. Specifically, the absorption sheet 23 is arranged such that the area of a portion on the rear side with respect to the center position C1 is larger than the area of a portion on the front side with respect to the center position C1 (see FIG. 2). This is because the possibility of the dog approaching a feeding plate 51 is high because of the smell of food remaining in the feeding plate 51 when the dog enters the dog toilet 10, and therefore the possibility of the dog urinating on the rear side relative to the center position C1 is high. Thus, making the area of the rear-side (feeding-plate-51-side) portion larger than the area of the front-side (access-opening-33-side) portion relative to the center position C1 makes it possible for the absorption sheet 23 to be arranged efficiently.

The grate 24 is arranged so as to cover the absorption sheet 23 (that is, in the excretion area) . The grate 24 has the plurality of apertures 24a penetrating in the up-down direction and enables urine or the like excreted by the dog to pass through the apertures 24a from the upper side to the lower side (toward the absorption sheet 23) in the up-down direction. That is, the grate 24 corresponds to a liquid-permeable layer. The grate 24 in the present embodiment is formed into a rectangular grating shape, and the apertures 24a each have a rectangular shape in plan view. However, the configuration is not limited to this, and a grate having circular or hexagonal apertures may be used. As described later, the positive electrode 41 and the negative electrode 42 of the urination detection sensor 40 are arranged on the grate 24.

As a material of the grate 24, an insulator, particularly, a non-liquid-absorbent insulator that does not absorb liquid (for example, polypropylene, silicone, or the like) is used. This is because, if an absorbent insulator (for example, sponge) is used, the insulator absorbs urine. The absorbed urine causes the positive electrode 41 and the negative electrode 42 to continue conducting electricity, which hinders accurate determination. That the grate 24 is composed of a non-liquid-absorbent insulator makes it less likely for the grate 24 to hold urine. This makes it possible to prevent the positive electrode 41 and the negative electrode 42 from continuing conducting electricity. In addition, as the material of the grate 24, a hydrophobic material having a surface that increases surface tension is preferably used.

The cover 25 is attached above the bottom-portion main body 21 and covers the bottom-portion main body 21 and the protruding portion 22. In addition, the cover 25 has an opening in a portion corresponding to the position where the absorption sheet 23 is arranged (the excretion area). Consequently, the cover 25 constitutes an upper surface of the bottom portion 20 except for the excretion area. In addition, the grate 24 is suspended on the cover 25 in such a manner to move in the up-down direction.

The wall portion 30 is provided so as to surround the four sides of the bottom portion 20 (in the front-rear direction and the left-right direction) . In the following description, an inner side of the wall portion 30 is also referred to as inside the toilet. The wall portion 30 in the present embodiment includes a plate wall 31 (corresponding to a first wall portion), a fence 32 (corresponding to a second wall portion), and the access opening 33.

The plate wall 31 is a plate-shaped wall that is continuous and is erected on the bottom portion 20. The plate wall 31 illustrated in FIG. 3 has side faces that are perpendicular to the horizontal plane and that have a constant thickness irrespective of the position in the up-down direction. However, the configuration of the plate wall 31 is not limited to this. For example, the plate wall 31 may be an inclined surface having a thickness that decreases from the lower side to the upper side in the up-down direction. Conversely, the plate wall 31 may be an inclined surface having a thickness that increases from the lower side to the upper side in the up-down direction.

The fence 32 is a mesh-like barrier having voids and is provided above the plate wall 31.

Thus, the wall portion 30 of the dog toilet 10 according to the present embodiment has a combined configuration of the plate wall 31 and the fence 32. The plate wall 31 constitutes the lower portion of the wall portion 30, and this ensures that food or urine of the dog are less likely to spill to an area outside the toilet. In addition, the fence 32 constitutes the upper portion of the wall portion 30, and this enables the dog to have good visibility, making it more likely for the dog to urinate in the toilet without any stress. In addition, a feeding tube 53 is easily drawn through the wall portion 30 to the inner side of the wall portion 30. Note that as materials of the plate wall 31 and the fence 32, any material, such as metal, plastic, or wood, may be used.

The access opening 33 is a portion where the dog enters and exits the toilet (the inner side of the wall portion 30) and is formed at the left end of a portion (front-side portion) of the wall portion 30 that demarcates the front side of the bottom portion 20. That is, the access opening 33 is provided on the front side relative to the center position C1 in the front-rear direction and on the left side relative to the center position C2 in the left-right direction. The access opening 33 in the present embodiment is formed by making an opening at the above-described portion of the wall portion 30 (the plate wall 31 and the fence 32) surrounding the bottom portion 20 (making the above-described portion discontinuous).

The urination detection sensor 40 is a sensor that detects whether there is urination by a dog (specifically, the presence of liquid) . The urination detection sensor 40 includes the positive electrode 41, the negative electrode 42, and a liquid sensor 43.

As illustrated in FIG. 4A and FIG. 4D, the positive electrode 41 is arranged on (the upper surface of) the grate 24. Note that as a material of the positive electrode 41, a material having high conductivity (for example, copper or rust-resistant stainless steel) is preferable.

The negative electrode 42 is also formed of a material having high conductivity, similarly to the positive electrode 41, and is arranged under (on the lower surface of) the grate 24.

Thus, the positive electrode 41 and the negative electrode 42 are provided on the grate 24 that covers the absorption sheet 23. This make urine be quickly absorbed by the absorption sheet 23, making it possible to reduce the amount of urine that remains on the electrodes. Consequently, it is possible to correctly detect the urination timing.

In FIG. 4A, in order to clarify the arrangement, the grate 24 and the individual electrodes (the positive electrode 41 and the negative electrode 42), and the negative electrode 42 and the absorption sheet 23 are illustrated as spaced apart from each other. However, they are actually in contact with each other. By keeping the negative electrode 42 in contact with the absorption sheet 23, urine adhered to the negative electrode 42 can be absorbed by the absorption sheet 23. This can suppress, for example, the occurrence of the smell of urine. Since the grate 24 is suspended on the cover 25 to be vertically movable as described above, the negative electrode 42 is vertically movable together with the grate 24 even if the absorption sheet 23 expands due to absorbing urine.

As illustrated in FIG. 4C, the positive electrode 41 is divided into a plurality of branches on the grate 24, and the plurality of branches are linearly arranged extending along the front-rear direction with spaces therebetween in the left-right direction to be parallel to one another. In addition, the negative electrode 42 is also divided into a plurality of branches on the grate 24, and the plurality of branches are linearly arranged extending along the front-rear direction with spaces therebetween in the left-right direction to be parallel to one another (to form pairs with the positive electrode 41). A plurality of pairs of the positive electrode 41 and the negative electrode 42 are arranged side-by-side in the horizontal direction (the left-right direction). Consequently, the electrodes can be arranged densely, making it possible to increase the accuracy of the urination detection sensor 40. Note that the positive electrode 41 and the negative electrode 42 forming a pair are spaced apart in the up-down direction and superpose in terms of position in the horizontal direction (the left-right direction herein).

Although the positive electrode 41 is arranged on the grate 24 and the negative electrode 42 is arranged under the grate 24 in the present embodiment, the arrangement may be reversed. That is, the negative electrode 42 may be arranged on the grate 24 and the positive electrode 41 may be arranged under the grate 24. In addition, although each of the positive electrode 41 and the negative electrode 42 that constitute a pair is linearly arranged along the front-rear direction in the present embodiment, the arrangement is not limited to this. For example, each of the positive electrode 41 and the negative electrode 42 may be arranged in the left-right direction. In addition, each of the positive electrode 41 and the negative electrode 42 may be arranged to be bent in a zigzag shape on the horizontal plane in accordance with the shape of the grate 24. A distance d between the electrodes that are adjacent to each other in the horizontal direction may be arbitrary. However, since urine needs at least to be directly in contact with the electrodes, the distance is desirably 5 cm or less. In addition, if the distance is too short, it is difficult to remove feces soiling. Therefore, the distance is desirably 1 cm or greater.

In addition, a width W2 of the grate 24 illustrated in FIG. 4D is greater than a width W1 of the positive electrode 41 and the negative electrode 42. This is because, if the width W2 of the grate 24 is less than the width W1 of the positive electrode 41 and the negative electrode 42, there is a risk that urine remains on a side wall of the grate 24 owing to surface tension of the urine and the conducting state continues, and decreases the accuracy of the urination detection sensor 40. In the present embodiment, the width W2 of the grate 24 is set greater than the width W1 of the positive electrode 41 and the negative electrode 42. Thus, urine covering a portion between a pair of the positive electrode 41 and the negative electrode 42 is more likely to undergo fluid thread breakup, making it possible to increase the accuracy of the urination detection sensor 40.

The liquid sensor 43 amplifies an electric signal (voltage) when the positive electrode 41 and the negative electrode 42 conduct electricity, and outputs the amplified signal to a microcomputer 55. Note that, in the present embodiment, a method for controlling the liquid sensor 43 (and the microcomputer 55 described later) involves analog control using an analog voltage value. However, the control method is not limited to this, and digital control using H (high)/L (low) digital signals may be used.

When a dog urinates above the grate 24, urine passes through the positive electrode 41, the grate 24 (the apertures 24a), and the negative electrode 42 and is absorbed by the absorption sheet 23 as illustrated in FIG. 4A. At this time, the positive electrode 41 and the negative electrode 42 conduct electricity through the urine as illustrated in FIG. 4A and FIG. 4D, and an output voltage of the liquid sensor 43 rises. After the dog finishes urinating, an electrical conductor no longer exists between the positive electrode 41 and the negative electrode 42 because the grate 24 is a non-liquid-absorbent insulator. Therefore, the negative electrode 42 and the positive electrode 41 no longer conduct electricity (enters nonconducting state), decreasing the output voltage of the liquid sensor 43.

As illustrated in FIG. 5, the feeder unit 50 includes the feeding plate 51, the feeder 52, the feeding tube 53, a power supply 54, the microcomputer 55, and a relay circuit 56.

The feeding plate 51 is a container in which dog food is held. The feeding plate 51 includes a bottom wall 51a having a circular shape in plan view, and a peripheral side wall 51b that is erected upward on the periphery of the bottom wall 51a. In the present embodiment, the bottom wall 51a of the feeding plate 51 corresponds to a feeding area, and the peripheral side wall 51b corresponds to a convex member. As a result of the feeding plate 51 including the peripheral side wall 51b, food supplied from a feeding port 53a (described later) of the feeding tube 53 is prevented from rolling out onto the excretion area. Note that food is stored in a food container 100 (described later) of the feeder 52 and is supplied to the feeding plate 51 from the feeder 52 through the feeding tube 53.

As illustrated in FIG. 1 and FIG. 2, the feeding plate 51 (in other words, the feeding port 53a) is arranged in a corner portion (that is, a corner portion on a left rear side in the wall portion 30), and this corner portion is formed by a portion of the wall portion 30 on the rear side in the front-rear direction and a portion of the wall portion 30 on the left side in the left-right direction. This can ensure a wide space (excretion area) in the toilet.

The feeder 52 is an electrically powered apparatus (feeder) that automatically supplies food on the basis of a detection result of the urination detection sensor 40. The feeding tube 53 is attached to the feeder 52. Note that the feeder 52 is arranged outside the wall portion 30, and that the feeding tube 53 attached to the feeder 52 is drawn to the inner side of the wall portion 30 through the fence 32. The configuration of the feeder 52 will be described later.

The feeding tube 53 is a hollow tubular member (for example, a tube) for supplying food ejected from the feeder 52 to the feeding plate 51, and the feeding tube 53 has the feeding port 53a. The feeding port 53a is an outlet of the feeding tube 53 and is arranged above the feeding plate 51 in the toilet. That is, the feeding port 53a is arranged on the rear side relative to the center position C1 in the front-rear direction. As described above, in the present embodiment, the feeding plate 51 is arranged on the rear side in the front-rear direction and the access opening 33 is provided in the wall portion 30 on the front side in the front-rear direction. If the positions of the feeding port 53a and the access opening 33 are close to each other, there is a risk that the dog discharge residual urine in an area outside the toilet while eating food. However, in the present embodiment, the positions of the feeding port 53a and the access opening 33 are apart from each other. This makes it possible for the dog which is eating food to stay in the toilet after urination, making it possible to prevent an area outside the toilet from being soiled with urine.

The power supply 54 supplies electric power to each of the components (the feeder 52, the microcomputer 55, and the relay circuit 56) of the feeder unit 50.

The output of the urination detection sensor 40 (the liquid sensor 43) is input to the microcomputer 55. The microcomputer 55 performs control described below, in accordance with a change in voltage of the urination detection sensor 40. That is, when the voltage falls below a predetermined voltage (because the positive electrode 41 and the negative electrode 42 stop conducting electricity) after the voltage rises (because the positive electrode 41 and the negative electrode 42 conduct electricity), the microcomputer 55 causes the relay circuit 56 to operate.

In accordance with the output of the microcomputer 55, the relay circuit 56 operates (is active) for a certain period according to controlling of the time in seconds, and thereby the relay circuit 56 causes the feeder 52 to operate (specifically, a motor 120 described later is driven to rotate a rotational body 111). Consequently, food is supplied from the feeder 52.

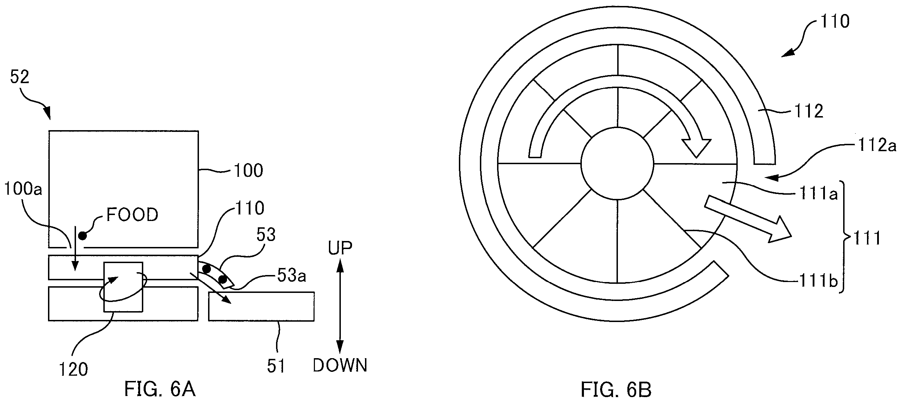

FIG. 6A is a schematic sectional view illustrating an example of a configuration of the feeder 52, and FIG. 6B is a top view of a scale 110 illustrated in FIG. 6A.

The feeder 52 includes the food container 100, the scale 110, and the motor 120.

The food container 100 is a hollow cylindrical member provided in an upper portion of the feeder 52 and stores dog food therein. In addition, a through hole 100a is provided in a bottom portion of the food container 100, so that food drops from the through hole 100a due to its weight.

The scale 110 is a weigh scale arranged under the food container 100 and includes the rotational body 111 and a periphery wall portion 112.

The rotational body 111 includes a bottom portion 111a and a plurality of partition plates 111b.

The bottom portion 111a is a plate-shaped member having a circular shape in plan view. Note that an upper surface of the bottom portion 111a is an inclined surface where the height of an outer portion is lower than the height of the center position.

The partition plates 111b are provided on the upper surface of the bottom portion 111a. The plurality of partition plates 111b are provided radially at an equal interval, with respect to an axis located at the center of the bottom portion 111a. Consequently, the partition plates 111b partition a space above the bottom portion 111a into a plurality of spaces.

The periphery wall portion 112 is provided to surround the outer side of the rotational body 111. An opening 112a is formed in the periphery wall portion 112 at a position corresponding to one of partitioned portions formed by the partition plates 111b. In addition, outside the opening 112a, the feeding tube 53 is arranged. Food ejected from the opening 112a is supplied to the feeding plate 51 through the feeding tube 53.

The motor 120 is driven in accordance with the output of the relay circuit 56, rotating the rotational body 111 of the scale 110. That is, the motor 120 rotates the rotational body 111 in a circumferential direction around the axis located at the center of the rotational body 111.

Operation of the urination detection sensor 40 and the feeder unit 50 will be described below.

When a dog urinates above the grate 24 and urine reaches the positive electrode 41 and the negative electrode 42 of the urination detection sensor 40, the positive electrode 41 and the negative electrode 42 conduct electricity through the urine, which is an electrical conductor. The conducted voltage is amplified by the liquid sensor 43 and is sent to the microcomputer 55. When the output of the urination detection sensor 40 (the liquid sensor 43) falls below a predetermined voltage as a result of the dog finishing urinating, the microcomputer 55 causes the relay circuit 56 to operate for a certain period. Consequently, the motor 120 of the feeder 52 is driven to rotate the rotational body 111 of the scale 110 by a certain amount. As a result of the rotational body 111 rotating, food located between the adjacent partition plates 111b of the scale 110 is ejected from the opening 112a of the periphery wall portion 112 and is supplied to the feeding plate 51 through the feeding tube 53. In this manner, food is automatically supplied in response to urination by the dog. In addition, food stored in the food container 100 is dropped through the through hole 100a to the scale 110 located below (to a portion which has become empty as a result of food having ejected from the opening 112a).

As described above, the wall portion 30 is provided to surround the bottom portion 20 in the dog toilet 10 according to the present embodiment. Thus, a position where the dog excretes is limited to being within the wall portion 30 (inside the toilet). Further, the access opening 33 for a dog is provided on the front side relative to the center position C1 in the front-rear direction, and the feeding port 53a of food is provided on the rear side relative to the center position C1 in the front-rear direction. This can delay the time for the dog that eats the supplied food exits to the outside of the wall portion 30 (outside the toilet) and can prevent an area outside the toilet from being soiled with residual urine or the like.

### Modification

In the embodiment described above, both the feeding plate 51 (in other words, the feeding port 53a) and the access opening 33 are provided on the same side (on the left side) relative to the center position C2 in the left-right direction. However, the arrangement is not limited to this.

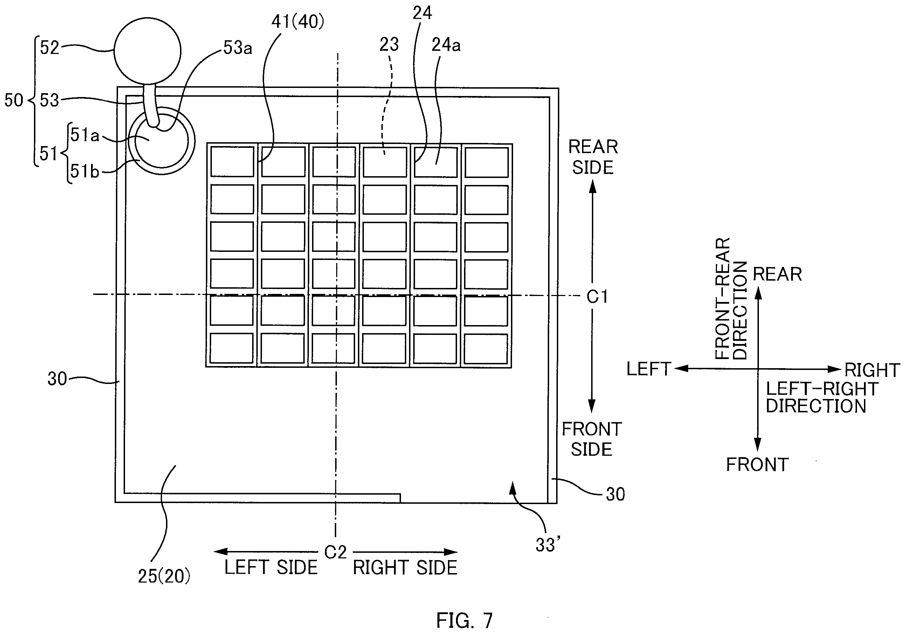

FIG. 7 is a diagram illustrating a modification of the dog toilet 10. In the figure, the same components as in FIG. 2 are denoted by the same references to omit description thereof.

In this modification, an access opening 33' is provided. The access opening 33' is provided on a right side of the front portion of the wall portion 30 (on the right side relative to the center position C2 in the left-right direction) . The feeding port 53a and the access opening 33' are arranged at diagonal positions. In this case, it is possible to delay the dog from reaching the access opening after eating the food. On the other hand, when the access opening 33 and the feeding port 53a are arranged on the same side relative to the center position C2 in the left-right direction as illustrated in FIG. 2, the dog is more likely to enter the toilet.

### Other embodiments

Although the embodiment of the present disclosure has been described hereinabove, the above embodiment of the present disclosure is simply to facilitate understanding of the present disclosure and are not in any way to be construed as limiting the present disclosure. The present disclosure may variously be changed or altered without departing from its gist and encompass equivalents thereof. For example, modification which will be described below is possible.

### Wall portion 30

In the embodiment described above, the wall portion 30 is constituted by the plate wall 31 and the fence 32. However, the configuration is not limited to this. For example, the wall portion 30 may be constituted only by the plate wall 31 that is continuous and plate-shaped. In this case, it is possible to more reliably prevent food or urine of a dog from spilling to an area outside the toilet. For example, if the dog urinates while raising a leg, it is possible to prevent urine from spilling to an area outside the toilet. It is also possible to prevent urine from reaching the excretion area when the dog urinates toward the toilet from outside the toilet (prevent the urination detection sensor 40 from detecting urination erroneously). In this case, an access opening may be provided by removing a portion of the plate wall 31.

In addition, the wall portion 30 may be constituted only by the fence 32. Further, the mesh-like shape of the fence 32 is not limited to the one illustrated in FIG. 1 and may be any shape. In addition, the bottom portion 20 may have a wall as the circumference thereof rises upward to have a wall shape.

### Feeding plate 51

In the embodiment described above, food is supplied to the feeding plate 51. However, the configuration is not limited to this. For example, food may be scattered on the bottom portion 20. In this case, however, food may roll out onto the excretion area, which is hygienically unpreferable. Therefore, a configuration for preventing food from rolling out onto the excretion area is desirably made as described below.

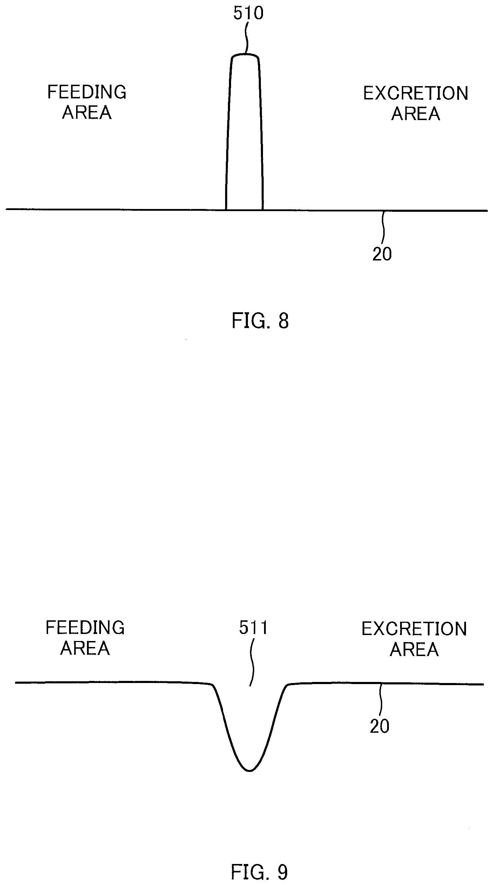

FIG. 8 is an explanatory diagram illustrating an example of a case where the feeding plate 51 is not used.

In FIG. 8, the bottom portion 20 is provided with a convex member 510 that protrudes upward. The convex member 510 is provided continuously between the feeding area and the excretion area. Also in the case where the continuous convex member 510 is provided between the feeding area and the excretion area in this manner, it is possible to prevent food from rolling out onto the excretion area. Note that the feeding area is fixed in this case. In contrast, in the case where the feeding plate 51 is used, the feeding area can be moved appropriately.

FIG. 9 is an explanatory diagram illustrating another example of a case where the feeding plate 51 is not used.

In FIG. 9, a groove portion 511 that is concave downward is formed in the bottom portion 20. The groove portion 511 is provided continuously between the feeding area and the excretion area. Also in the case where the continuous groove portion 511 is provided between the feeding area and the excretion area in this manner, it is possible to prevent food from rolling out onto the excretion area. Note also that in this case, the feeding area is fixed.

### Feeder 52

In the embodiment described above, the feeder 52 is arranged outside the wall portion 30. However, the arrangement is not limited to this and the feeder 52 may be arranged within the wall portion 30. However, if the feeder 52 is arranged outside the wall portion 30, it is possible to widen an area in the toilet (excretion area). In addition, it is possible to prevent the dog from eating food stored in the feeder 52 (specifically, the food container 100).

In addition, the feeder 52 is not limited to the one described above, and may have any size and any configuration.

### Access Opening 33

In the embodiment described above, the access opening 33 is formed by making an opening at a portion of the wall portion 30. However, the configuration is not limited to this. For example, a slidable door may be provided. In this case, an automatic door that allows a dog to enter and exit by itself is desirable. In addition, in this case, when a door that opens after a certain period passes since detection of urine is used, it is possible to make the dog stay in the toilet for a while after urination. Therefore, it is possible to prevent an area outside the toilet from being soiled with residual urine or the like.

### Urination Detection Sensor 40

In the embodiment described above, the urination detection sensor 40 is a sensor that detects whether there is urination on the basis of whether there is conduction of electricity between the positive electrode 41 and the negative electrode 42. However, the urination detection sensor 40 is not limited to this and may be a sensor of another type. For example, a light-emitting unit and a lightreceiving unit of an infrared sensor may be provided respectively on one side and the other side of the urination area in the left-right direction (or the front-rear direction). It is also possible to determine whether there is urination in this case depending on whether infrared radiation is blocked by urine.

### [Reference Signs List]

- 10: dog toilet,
- 20: bottom portion, 21 bottom-portion main body,
- 22: protruding portion, 23 absorption sheet (absorbent member),
- 24: grate, 24a aperture,
- 25: cover,
- 30: wall portion,
- 31: plate wall (first wall portion),
- 32: fence (second wall portion),
- 33: access opening,
- 40: urination detection sensor,
- 41: positive electrode,
- 42: negative electrode,
- 43: liquid sensor,
- 50: feeder unit,
- 51: feeding plate,
- 51a: bottom wall (feeding area), 51b peripheral side wall (convex member),
- 52: feeder,
- 53: feeding tube, 53a feeding port,
- 54: power supply,
- 55: microcomputer,
- 56: relay circuit,
- 100: food container,
- 100a: through hole,
- 110: scale, 111 rotational body,
- 111a: bottom portion, 111b partition plate,
- 112: periphery wall portion,
- 112a: opening,
- 120: motor,
- 510: convex member,
- 511: groove portion,
- C1: center position,
- C2: center position (left-right center position)

## Claims

1. A dog toilet having a front-rear direction, a left-right direction, and an up-down direction that are perpendicular to one another,
the dog toilet (10) comprising:
a bottom portion (20);
a urination detection sensor (40) capable of detecting whether there is urination by a dog;
a wall portion (30) provided to surround the bottom portion (20);
an access opening (33) provided in the wall portion (30) on one side in the frontrear direction with respect to a front-rear-direction center position (C1); and
a feeder (52) configured to supply food from a feeding port (53a) based on a detection result of the urination detection sensor (40),
the feeding port (53a) being provided on another side in the front-rear direction with respect to the front-rear-direction center position (C1), wherein
a liquid-absorbent absorbent member that absorbs urine is arranged in the bottom portion (20), and
an area of a portion of the absorbent member located on the other side in the front-rear direction is larger than an area of a portion of the absorbent member located on the one side in the front-rear direction.

2. The dog toilet according to Claim 1, wherein
the wall portion (30) is a continuous plate-shaped wall.

3. The dog toilet according to Claim 1, wherein
the wall portion (30) includes:
a first wall portion (30) that is plate-shaped and is erected on the bottom portion (20), and
a second wall portion (30) that is mesh-like and is provided above the first wall portion (30).

4. The dog toilet according to any one of Claims 1 to 3, wherein
in the bottom portion (20), a continuous convex member is arranged between an excretion area of the dog and a feeding area where the food is supplied.

5. The dog toilet according to any one of Claims 1 to 3, wherein
in the bottom portion (20), a continuous concave groove is formed between an excretion area of the dog and a feeding area where the food is supplied.

6. The dog toilet according to any one of Claims 1 to 5, wherein
the bottom portion (20) is provided with a protruding portion (22) that surrounds the absorbent member.

7. The dog toilet according to any one of Claims 1 to 6, wherein
the feeding port (53a) is arranged in a corner portion, and
the corner portion is constituted by a portion of the wall portion (30) on the other side in the front-rear direction and a portion of the wall portion (30) on either one of sides in the left-right direction.

8. The dog toilet according to any one of Claims 1 to 7, wherein
the feeder (52) is provided outside the wall portion (30).

9. The dog toilet according to any one of Claims 1 to 8, wherein
the access opening (33) is provided with a door, and
the door is an automatically opening and closing door that opens after a predetermined period passes since the urination detection sensor (40) detects urination by the dog.

10. The dog toilet according to any one of Claims 1 to 9, wherein
the feeding port (53a) is provided on one side in the left-right direction with respect to a left-right-direction center position, and
the access opening (33) is provided on another side in the left-right direction with respect to the left-right-direction center position.

11. The dog toilet according to any one of Claims 1 to 8, wherein
the feeding port (53a) and the access opening (33) are provided on an identical side in the left-right direction with respect to a left-right-direction center position.

## Patentansprüche

1. Hundetoilette mit einer Vorwärts-Rückwärts-Richtung, einer Links-Rechts-Richtung und einer Auf-Ab-Richtung, die senkrecht zueinander sind,
wobei die Hundetoilette (10) Folgendes umfasst:
einen unteren Abschnitt (20);
einen Urindetektionssensor (40), der in der Lage ist, zu detektieren, ob Urin von einem Hund vorhanden ist;
einen Wandabschnitt (30), der bereitgestellt ist, um den unteren Abschnitt (20) zu umgeben;
eine Zugangsöffnung (33), die in dem Wandabschnitt (30) auf einer Seite in der Vorwärts-Rückwärts-Richtung in Bezug auf eine Mittelposition (C1) der Vorwärts-Rückwärts-Richtung bereitgestellt ist; und
eine Fütterungseinheit (52), die dazu konfiguriert ist, Futter aus einer Fütterungsöffnung (53a) auf Grundlage eines Detektionsergebnisses des Urindetektionssensors (40) zuzuführen,
wobei die Fütterungsöffnung (53a) auf einer anderen Seite in der Vorwärts-Rückwärts-Richtung in Bezug auf die Mittelposition (C1) der Vorwärts-Rückwärts-Richtung bereitgestellt ist, wobei
ein Flüssigkeitsabsorptionselement, das Urin absorbiert, in dem unteren Abschnitt (20) angeordnet ist, und
ein Bereich eines Abschnitts des Absorptionselements, der sich auf der anderen Seite in der Vorwärts-Rückwärts-Richtung befindet, größer ist als ein Bereich eines Abschnitts des Absorptionselements, der sich auf der einen Seite in der Vorwärts-Rückwärts-Richtung befindet.

2. Hundetoilette nach Anspruch 1, wobei
der Wandabschnitt (30) eine durchgehende plattförmige Wand ist.

3. Hundetoilette nach Anspruch 1, wobei
der Wandabschnitt (30) Folgendes beinhaltet:
einen ersten Wandabschnitt (30), der plattenförmig ist und auf dem unteren Abschnitt (20) aufgerichtet ist, und
einen zweiten Wandabschnitt (30), der gitterartig ist und über dem ersten Wandabschnitt (30) bereitgestellt ist.

4. Hundetoilette nach einem der Ansprüche 1 bis 3, wobei
in dem unteren Abschnitt (20) ein durchgehendes konvexes Element zwischen einem Ausscheidungsbereich des Hundes und einem Fütterungsbereich, in dem das Futter zugeführt wird, angeordnet ist.

5. Hundetoilette nach einem der Ansprüche 1 bis 3, wobei
in dem unteren Abschnitt (20) eine durchgehende konkave Nut zwischen einem Ausscheidungsbereich des Hundes und einem Fütterungsbereich, in dem das Futter zugeführt wird, gebildet ist.

6. Hundetoilette nach einem der Ansprüche 1 bis 5, wobei
der untere Abschnitt (20) mit einem vorstehenden Abschnitt (22) versehen ist, der das Absorptionselement umgibt.

7. Hundetoilette nach einem der Ansprüche 1 bis 6, wobei
die Fütterungsöffnung (53a) in einem Eckenabschnitt angeordnet ist und
der Eckenabschnitt aus einem Abschnitt des Wandabschnitts (30) auf der anderen Seite in der Vorwärts-Rückwärts-Richtung und einem Abschnitt des Wandabschnitts (30) auf einer der Seiten in der Links-Rechts-Richtung besteht.

8. Hundetoilette nach einem der Ansprüche 1 bis 7, wobei
die Fütterungseinheit (52) außerhalb des Wandabschnitts (30) bereitgestellt ist.

9. Hundetoilette nach einem der Ansprüche 1 bis 8, wobei
die Zugangsöffnung (33) mit einer Tür versehen ist und
die Tür eine sich automatisch öffnende und schließende Tür ist, die sich öffnet, nachdem eine vorbestimmte Dauer verstrichen ist, seit der Urindetektionssensor (40) Urin von dem Hund detektiert hat.

10. Hundetoilette nach einem der Ansprüche 1 bis 9, wobei
die Fütterungsöffnung (53a) auf einer Seite in der Links-Rechts-Richtung in Bezug auf eine Mittelposition der Links-Rechts-Richtung bereitgestellt ist und
die Zugangsöffnung (33) auf einer anderen Seite in der Links-Rechts-Richtung in Bezug auf die Mittelposition der Links-Rechts-Richtung bereitgestellt ist.

11. Hundetoilette nach einem der Ansprüche 1 bis 8, wobei
die Fütterungsöffnung (53a) und die Zugangsöffnung (33) auf einer identischen Seite in der Links-Rechts-Richtung in Bezug auf eine Mittelposition der Links-Rechts-Richtung bereitgestellt sind.

## Revendications

1. Toilettes pour chiens ayant une direction avant-arrière, une direction gauche-droite et une direction haut-bas qui sont perpendiculaires les unes aux autres,
les toilettes pour chiens (10) comprenant :
une partie inférieure (20) ;
un capteur de détection de miction (40) capable de détecter s'il y a une miction par un chien ;
une partie de paroi (30) prévue pour entourer la partie inférieure (20) ;
une ouverture d'accès (33) prévue dans la partie de paroi (30) sur un côté dans la direction avant-arrière par rapport à une position centrale (C1) dans la direction avant-arrière ; et
un dispositif d'alimentation (52) conçu pour fournir de la nourriture à partir d'un port d'alimentation (53a) sur la base d'un résultat de détection du capteur de détection de miction (40),
le port d'alimentation (53a) étant prévu sur un autre côté dans la direction avant-arrière par rapport à la position centrale (C1) dans la direction avant-arrière, dans lequel
un élément absorbant des liquides qui absorbe l'urine est agencé dans la partie inférieure (20), et
une zone d'une partie de l'élément absorbant située de l'autre côté dans la direction avant-arrière est plus grande qu'une zone d'une partie de l'élément absorbant située sur un côté dans la direction avant-arrière.

2. Toilettes pour chiens selon la revendication 1, dans lesquelles la partie de paroi (30) est une paroi continue en forme de plaque.

3. Toilettes pour chiens selon la revendication 1, dans lesquelles la partie de paroi (30) comporte :
une première partie de paroi (30) qui est en forme de plaque et est dressée sur la partie inférieure (20), et
une seconde partie de paroi (30) qui est en forme de maillage et est agencée au-dessus de la première partie de paroi (30).

4. Toilettes pour chiens selon l'une quelconque des revendications 1 à 3, dans lesquelles
dans la partie inférieure (20), un élément convexe continu est agencé entre une zone d'excrétion du chien et une zone d'alimentation où la nourriture est fournie.

5. Toilettes pour chiens selon l'une quelconque des revendications 1 à 3, dans lesquelles
dans la partie inférieure (20), une rainure concave continue est formée entre une zone d'excrétion du chien et une zone d'alimentation où la nourriture est fournie.

6. Toilettes pour chiens selon l'une quelconque des revendications 1 à 5, dans lesquelles
la partie inférieure (20) est dotée d'une partie saillante (22) qui entoure l'élément absorbant.

7. Toilettes pour chiens selon l'une quelconque des revendications 1 à 6, dans lesquelles
le port d'alimentation (53a) est agencé dans une partie de coin, et
la partie de coin est constituée d'une partie de la partie de paroi (30) sur l'autre côté dans la direction avant-arrière et d'une partie de la partie de paroi (30) d'un côté ou de l'autre dans la direction gauche-droite.

8. Toilettes pour chiens selon l'une quelconque des revendications 1 à 7, dans lesquelles
le dispositif d'alimentation (52) est agencé à l'extérieur de la partie de paroi (30).

9. Toilettes pour chiens selon l'une quelconque des revendications 1 à 8, dans lesquelles
l'ouverture d'accès (33) est dotée d'une porte, et
la porte est une porte à ouverture et fermeture automatiques qui s'ouvre après l'écoulement d'une période prédéterminée depuis la détection par le capteur de détection de miction (40) de la miction du chien.

10. Toilettes pour chiens selon l'une quelconque des revendications 1 à 9, dans lesquelles
le port d'alimentation (53a) est prévu sur un côté dans la direction gauche-droite par rapport à une position centrale dans la direction gauche-droite, et
l'ouverture d'accès (33) est prévue sur un autre côté dans la direction gauche-droite par rapport à la position centrale dans la direction gauche-droite.

11. Toilettes pour chiens selon l'une quelconque des revendications 1 à 8, dans lesquelles
le port d'alimentation (53a) et l'ouverture d'accès (33) sont agencés sur un côté identique dans la direction gauche-droite par rapport à une position centrale dans la direction gauche-droite.
